Europäisches Patentamt

European Patent Office

Office européen des brevets

(11) Publication number: **0 247 676**
A1

## (12) EUROPEAN PATENT APPLICATION

(21) Application number: **87200913.9**

(22) Date of filing: **18.05.87**

(51) Int. Cl.⁴: **H 05 B 3/78**, A 01 K 63/06

(30) Priority: **27.05.86 IT 6192786 U**

(43) Date of publication of application: **02.12.87**
**Bulletin 87/49**

(84) Designated Contracting States: **DE FR GB IT**

(71) Applicant: **NEWA S.r.l., Via Boscalto, 32,
I-35010 Loreggia Padova (IT)**

(72) Inventor: **Strada, Antonio, Via Interna 44/c,
I-33170 Pordenone (IT)**

(74) Representative: **Piovesana, Paolo, Corso del Popolo, 70,
I-30172 Venezia-Mestre (IT)**

(54) Heating element for aquarium and the like.

(57) An aquarium heating element comprising a bundle of hollow rods (2) of insulating material, and a spiral electrical resistance element (3) which extends along their interior.

This invention relates to a heating element for aquariums and the like.

Thermostatically controlled immersion heater devices are known for maintaining acquarium water within temperatures compatible with the living conditions required by the fish. Generally, these thermostatically controlled heater devices comprise a cylindrical glass container housing a heating element consisting of an electrical resistance element mounted on a thermally insulating support and fed electrically by way of a thermostat of the bimetallic strip type. The device is fitted to the acquarium walls by small suckers.

A known heating element consists substantially of a tubular glass support on which a resistance element is wound in the form of a spiral. The tubular support and resistance element are inserted into a container and centered relative to its wall by means of previously dried silica.

However, this known heating element has certain drawbacks, and in particular:

- a poor appearance due to the silica, the presence' of which means that the external container must be painted or in any event be non-transparent,

- a high cost,

- a certain heaviness which can lead to separation of the suckers from the acquarium walls,

- an upper limit on absorbed power due to the impossibility of keeping the turns closer together than a certain limiting distance for a given resistance value; in this respect, on the one hand it is not possible to set the turns closer together than a certain limiting distance in order to increase the overall length of the resistance element for a given external size, and on the other hand it is not advisable to increase the tube dimensions and resistance element length beyond a certain limit because of the additional costs of material, sand and glass that this would require. Moreover, an excessive heating element size is often incompatible with the height of the aquarium.

An aquarium heating element is also known comprising a cylindrical ceramic support with its lateral surface provided with a helical groove housing a resistance spiral.

However, this heating element also has certain drawbacks, including:

- a poor apperance,

- a high ceramic support cost for a given resistance value,

- a high weight,

- the possibility of breakage of the container. This is because when the resistance element expands on heating, it can leave its seat and touch the glass container, which would than have its two surfaces subjected to different temperatures.

Finally, an aquarium heating element is also known comprising a cylindrical ceramic support provided with a plurality of longitudinal grooves housing a resistance element in the form of a flat coil.

This heating element has the drawback of a certain assembly difficulty deriving from the insertion of the resistance element into the grooves.

An object of the invention is to obviate the drawbacks jointly or separately present in known heating elements by providing an aquarium heating element of low construction cost and of pleasant appearance.

A further object of the invention is to provide a heating element of low weight such as not to stress the suckers which fix it to the aquarium wall.

A further object ot he invention is to provide an aquarium heating element which can be used with containers of different dimensions.

These and further objects which will be apparent from the description given hereinafter are attained according to

- 4 -

0247676

the invention by an aquarium heating element characterised by comprising a bundle of hollow rods of insulating material and a spiral electrical resistance element which extends along their interior.

The present invention is further clarified hereinafter whith reference to the accompanying drawings in which:

Figure 1 is a perspective view of a heating element according to the invention; and

Figure 2 is a side view thereof when mounted in a thermostatically controlled heater device.

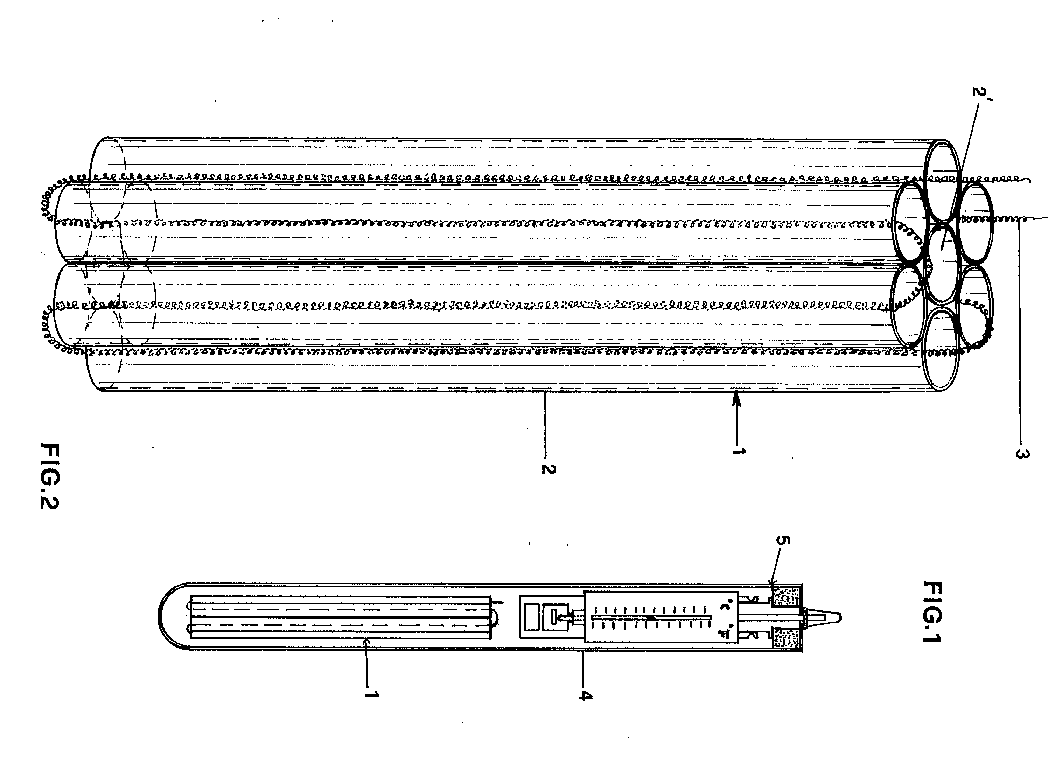

As can be seen from the figures, the heating element according to the invention comprises a support consisting of a bundle 1 of hollow cylindrical rods (tubes) 2 of transparent material, for example glass, which house an electrical resistance element 3 consisting for example of a nickel-chromium spiral.

The bundle 1 is inserted into a cylindrical glass container 4 of a thermostatically controlled heater device 5. In order for the terminals of the electrical resistance element 3 to leave from the same end of the bundle 1 of tubes 2, those traversed by the resistance element must obviously be of even number. Preferably, heating elements comprising four and six rods are constructed, according to the electrical power required and the allowable overall size.  In the case of a support comprising four rods,  these are simply bundled together, whereas in the case of a support comprising six rods,  in order to allow them to be arranged circumferentially it is preferable to also use a seventh rod 2' disposed at the centre of the other six, and through which the electrical resistance element does not pass.  It is also possible to replace the seventh rod 2' by a pair of rod stubs disposed as spacers at the ends of the bundle 1.

From the aforegoing it is apparent that the heating element according to the invention provides numerous advantages, and in particular:

- it is of pleasant appearance because of its conformation as a bundle of transparent or coloured glass tubes,

- it can be constructed by a rapid and economical method, by which the resistance element is passed through the tubes while disposed in an aligned arrangement, these then being grouped into a bundle. It is also possible to pass the resistance element through a single tube, which is then divided into the individual rods 2 by known methods,

- it enables reduced stock to be held as the basic element, ie the rod, can be used for containers of different diameter,

- it is of light weight and low construction cost by virtue of the material used,

- it enables the heating elements to be distinguished according to their absorbed electrical power, by semply using different colours for the glass tubes.

- 7 -

0247676

C L A I M S

1.    An aquarium heating element, characterised by comprising a bundle of hollow rods (2) of insulating material, and a spiral electrical resistance element (3) which extends along their interior.

2.    A heating element as claimed in claim 1, characterised in that the hollow rods are constructed of transparent material.

3.    A heating element as claimed in claim 1, characterised in that the hollow rods (2) are constructed of coloured material.

4.    A heating element as claimed in claim 1, characterised in that the hollow rods (2) are constructed of glass.

5.    A heating element as claimed in claim 3, characterised in that the hollow rods (2) are coloured according to the value of the electrical resistance element which traverses them.

6.    A heating element as claimed in claim 1, characterised by comprising an even number of rods (2) traversed internally by the electrical resistance element (3).

7.    A heating element as claimed in claim 6, characterised by comprising four rods (2) traversed internally by the electrical resistance element (3).

8.    A heating element as claimed in claim 6, characterised by comprising six rods (2) traversed internally by the elctrical resistance element (3) and disposed about a central rod (2') which is not traversed by the electrical resistance element and acts as a spacer.

9.    A heating element as claimed in claim 8, characterised in that the central rod (2') is replaced by two rod stubs disposed at the ends of the bundle (1) formed by the other six rods (2).

1/1

0247676

FIG.1

FIG.2

European Patent
Office

**EUROPEAN SEARCH REPORT**

## DOCUMENTS CONSIDERED TO BE RELEVANT

EP 87200913.9

| Category | Citation of document with indication, where appropriate, of relevant passages | Relevant to claim | CLASSIFICATION OF THE APPLICATION (Int. Cl.4) |
|---|---|---|---|
| Y | US - A - 4 124 793 (COLMAN)<br>* Abstract; column 2, lines 30-49; fig. 1 * | 1,2,4, 6,8 | H 05 B 3/78<br>A 01 K 63/06 |
| Y | DE - B - 1 275 226 (H.SCHWEDA)<br>* Column 2, lines 17-26; claim; fig. * | 1,2,4, 6,8 | |
| A | US - A - 3 895 217 (HALL)<br>* Column 2, line 16 - column 3, line 8; fig. 1,2 * | 1,6-8 | |
| A | CH - A - 152 176 (E.STOCKER)<br>* Totality * | 1,6-8 | |

**TECHNICAL FIELDS SEARCHED (Int. Cl.4)**

A 01 K 63/00

H 05 B 3/00

The present search report has been drawn up for all claims

| Place of search | Date of completion of the search | Examiner |
|---|---|---|
| VIENNA | 04-09-1987 | TSILIDIS |